# EUROPEAN PATENT APPLICATION

(11) **EP 3 249 621 A1**
(43) Date of publication of application: **29.11.2017**
(21) Application number: 17172799.3
(22) Date of filing: 24.05.2017
(51) Int. Cl.: G07G 1/01, G06Q 20/20, G06K 9/62

(54) **INFORMATION PROCESSING APPARATUS AND METHOD FOR ENSURING SELECTION OPERATION**

(30) Priority: 26.05.2016 JP 2016105576
(71) Applicant: Toshiba TEC Kabushiki Kaisha, Tokyo 141-0032 (JP)
(72) Inventor: NAITOU, Hidehiro, Shinagawa-ku, Tokyo 141-8562 (JP); IIZAKA, Hitoshi, Shinagawa-ku, Tokyo 141-8562 (JP); MIYAKOSHI, Hidehiko, Shinagawa-ku, Tokyo 141-8562 (JP); HATANAKA, Yuichiro, Shinagawa-ku, Tokyo 141-8562 (JP); SASAKI, Yuta, Shinagawa-ku, Tokyo 141-8562 (JP)
(74) Representative: Takeuchi, Maya

(57) **Abstract**

An information processing apparatus comprises a detection module, an extraction module, a display control module and an operation control module. The detection module detects an object contained in an image data captured by an image capturing section. The extraction module extracts candidates corresponding to the object photographed by the image capturing section based on a similarity degree between a feature amount of the object extracted from the image data and a feature amount of each object for comparison in the detected object. The display control module displays the image data captured by the image capturing section and the extracted candidates. The operation control module receives an operation for selecting the displayed candidate. The display control module displays another image data from which the detection module detects the object, instead of the image data displayed if no object is detected while the operation for selecting the candidate is not received.

## Description

### FIELD

Embodiments described herein relate generally to an information processing apparatus and a method for ensuring operation for selecting a commodity candidate.

### BACKGROUND

Conventionally, there is a general object recognition (object recognition) technology in which a feature amount of a target object, e.g., a commodity, extracted from a captured image data is compared with a feature amount for comparison stored beforehand to obtain a similarity degree therebetween, and a category of the object is recognized according to the similarity degree.

An information processing apparatus in which the target object is recognized with the general object recognition requires selection of the target object from candidates of the object to prevent incorrectness of the general object recognition if the similarity degree is smaller than a threshold value. However, there is a case in which an operator of the information processing apparatus forgets the target object to be recognized in a case in which the target object held over an image capturing section is placed, for example, on a table or counter, and thus selection of the target object from the candidates cannot be made. In this case, the operator has to perform the general object recognition of the target object again, and it is required to improve the operability of the information processing apparatus.

### DESCRIPTION OF THE DRAWINGS

Fig. 1 is a perspective view illustrating an example of a checkout system according to an embodiment;
Fig. 2 is a block diagram illustrating an example of the hardware structures of a POS terminal and a commodity reading apparatus;
Fig. 3 is a view illustrating an example of the data structure of a PLU file;
Fig. 4 is a block diagram illustrating characteristic functional components included in the POS terminal;
Fig. 5 is a view illustrating an example of the data structure of an image data table;
Fig. 6 is a view illustrating an example of a commodity registration screen;
Fig. 7 is a view illustrating an example of the commodity registration screen on which a part of display is switched;
Fig. 8 is a flowchart illustrating an example of a commodity registration processing executed by the POS terminal according to the embodiment;
Fig. 9 is a perspective view illustrating an example of the constitution of a self-checkout POS terminal; and
Fig. 10 is a block diagram illustrating an example of the hardware structure of the self-checkout POS terminal.

### DETAILED DESCRIPTION

In accordance with an embodiment, an information processing apparatus comprises a detection module, an extraction module, a display control module and an operation control module. The detection module detects an object contained in an image data captured by an image capturing section. The extraction module extracts candidates corresponding to the object photographed by the image capturing section based on a similarity degree between a feature amount of the object extracted from the image data and a feature amount of each object for comparison in the object detected by the detection module. The display control module displays the image data captured by the image capturing section and the candidates extracted by the extraction module. The operation control module receives an operation for selecting the candidate displayed by the display control module. The display control module displays another image data from which the detection module detects the object, instead of the image data displayed on condition that the detection module detects no object in a state in which the operation control module does not receive the operation for selecting the candidate.

Preferably, the extraction module extracts candidates corresponding to the object photographed by the image capturing section based on one or a plurality of the similarity degrees between the feature amount of the object extracted from one or a plurality of the image data and the feature amount of various objects for comparison, and the display control module displays one or a plurality of another image data from which the detection module detects the object on condition that the detection module detects no object in a state in which the operation control module does not receive the operation for selecting the candidate.

Preferably, the display control module displays the image data having the highest similarity degree in the candidates within another image data from which the detection module detects the object on condition that the detection module detects no object in a state in which the operation control module does not receive the operation for selecting the candidate.

Preferably, the display control module displays image data to which a processing for making the object contained in the image data easy to be identified is executed instead of the image data displayed on condition that the detection module detects no object in a state in which the operation control module does not receive the operation for selecting the candidate.

Preferably, the display control module displays the image data together with a message for requesting selection of the object from the candidates extracted by the extraction module on condition that the detection module detects no object in a state in which the operation control module does not receive the operation for selecting the candidate.

The present invention further relates to a method for ensuring an operation for selection, including: detecting an object contained in an image data captured; extracting candidates corresponding to the object photographed based on a similarity degree between a feature amount of the object extracted from the image data and a feature amount of each object for comparison in the object detected; displaying the image data captured and the extracted candidates; receiving an operation for selecting the displayed candidate; and displaying another image data from which the object is detected, instead of the image data displayed on condition that no object is detected in a state in which the operation for selecting the candidate is not received.

The method may further comprise candidates corresponding to the object photographed based on one or a plurality of the similarity degrees between the feature amount of the object extracted from one or a plurality of the image data and the feature amount of various objects for comparison.

The method may further comprise displaying one or a plurality of another image data from which the object is detected on condition that no object is detected in a state in which the operation for selecting the candidate is not received.

The method may further comprise displaying the image data having the highest similarity degree in the candidates within another image data from which the object is detected on condition that no object is detected in a state in which the operation for selecting the candidate is not received.

The method may further comprise displaying image data to which a processing for making the object contained in the image data easy to be identified is executed instead of the image data displayed on condition that no object is detected in a state in which the operation for selecting the candidate is not received.

The method may further comprise displaying the image data together with a message for requesting selection of the object from the candidates extracted on condition that no object is detected in a state in which the operation for selecting the candidate is not received.

Hereinafter, with reference to the accompanying drawings, an information processing apparatus and a method for ensuring an operation for selecting a commodity candidate according to an embodiment is described in detail as non-limiting examples. The embodiment described hereinafter is merely an embodiment of the information processing apparatus and the method for ensuring an operation for selecting a commodity candidate, and is not intended to limit the constitution and specification thereof. The present embodiment is applied to a checkout system introduced to a store such as a supermarket and the like.

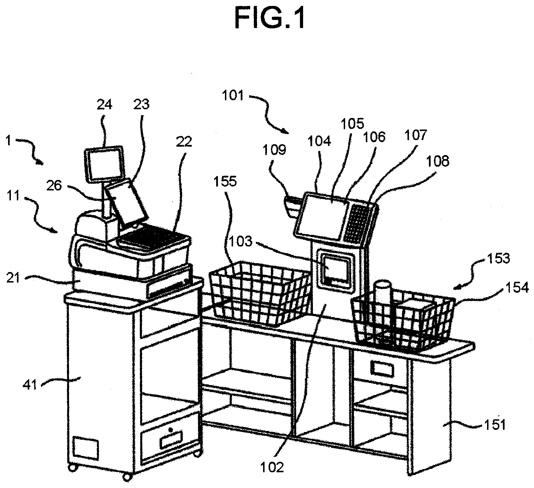

Fig. 1 is a perspective view illustrating an example of a checkout system 1 according to the embodiment. The checkout system 1 includes a commodity reading apparatus 101 for reading information relating to a commodity and a POS (Point Of Sales) terminal 11 for carrying out sales registration and settlement of commodities in one transaction. Hereinafter, an example in which the POS terminal 11 is applied as the information processing apparatus according to the present embodiment is described. As an example of a target object of the general object recognition, a case in which the target object is a commodity is described; however, the target object may be other objects except for the commodity.

The POS terminal 11 is placed on a drawer 21 on a checkout counter 41. The drawer 21 is opened or closed under the control of the POS terminal 11. The POS terminal 11 is provided with a keyboard 22 operated by an operator (shop clerk) on the upper surface thereof. The POS terminal 11 is provided with a first display device 23 for displaying various information to the operator behind the keyboard 22 if viewed from the operator who operates the keyboard 22. The first display device 23 is provided with a touch panel 26 for receiving various operations. The POS terminal 11 further includes a second display device 24, which is vertically arranged to be rotatable, behind the first display device 23. The second display device 24 shown in Fig. 1 faces a front side in Fig. 1; however, the second display device 24 is rotated to direct to the back side in Fig. 1 to display various information to a customer.

The counter table 151 horizontally elongated is arranged in an L-shape with the checkout counter 41 on which the POS terminal 11 is placed. A shopping basket 153 for receiving a commodity therein is placed on the counter table 151. The shopping basket 153 is not limited to a so-called basket shape, but may be a tray. The shopping basket 153 may be formed into a box shape, a bag shape and the like. The shopping basket 153 includes a first shopping basket 154 carried by the customer and a second shopping basket 155 placed to face the first shopping basket 154 across the commodity reading apparatus 101.

The commodity reading apparatus 101 connected with the POS terminal 11 to be capable of sending and receiving data is arranged on the counter table 151. The commodity reading apparatus 101 is built in a thin rectangular-shaped housing 102. The housing 102 includes a reading window 103 formed on the front surface thereof. The housing 102 also includes a display-operation section 104 mounted on the upper portion thereof.

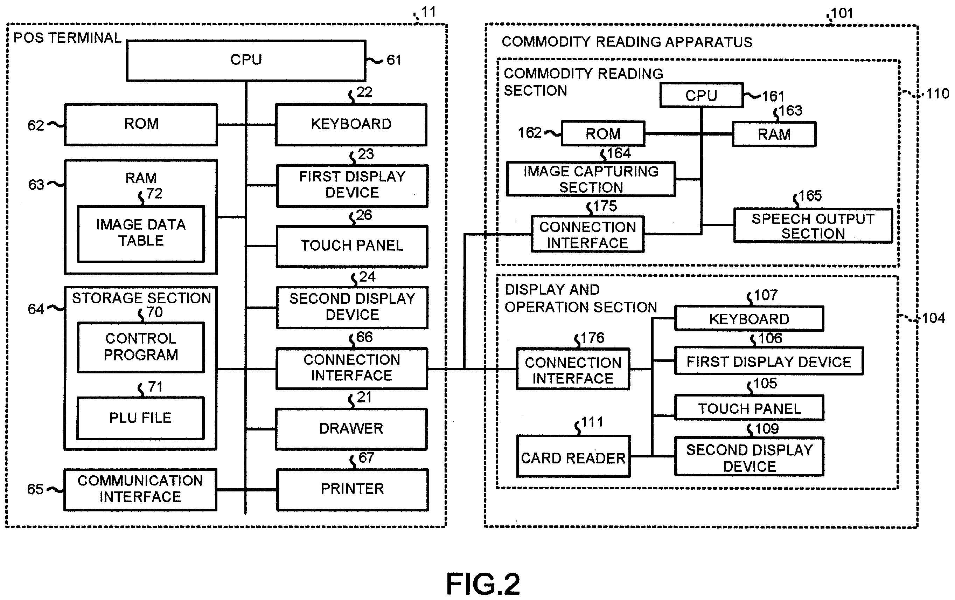

The display-operation section 104 is provided with a first display device 106 on the surface of which a touch panel 105 is overlaid. The commodity reading apparatus 101 is provided with a keyboard 107 arranged at the right side of the first display device 106. The commodity reading apparatus 101 is also provided with a card reading slot 108 of a card reader 111 (refer to Fig. 2) arranged at the right side of the keyboard 107. The commodity reading apparatus 101 is provided with a second display device 109 for providing information to the customer at the left backside of the display-operation section 104 if viewed from the operator.

The commodity reading apparatus 101 includes a commodity reading section 110 (refer to Fig. 2) inside the housing 102. The commodity reading section 110 is provided with an image capturing section 164 (refer to Fig. 2) at the rear side of the reading window 103.

The first shopping basket 154 accommodates commodities relating to one transaction. The operator who operates the commodity reading apparatus 101 moves the commodities in the first shopping basket 154 one by one to the second shopping basket 155. During the movement, the operator holds the commodity over the reading window 103 of the commodity reading apparatus 101. At this time, the image capturing section 164 (refer to Fig. 2) arranged inside the reading window 103 photographs the commodity.

Fig. 2 is a block diagram illustrating an example of the hardware structures of the POS terminal 11 and the commodity reading apparatus 101. The POS terminal 11 includes a CPU (Central Processing Unit) 61, a ROM (Read Only Memory) 62, a RAM (Random Access Memory) 63, a storage section 64, a communication interface 65, a keyboard 22, the first display device 23, the touch panel 26, the second display device 24, a connection interface 66, a drawer 21, and a printer 67. The CPU 61, the ROM 62, the RAM 63, the storage section 64, the communication interface 65, the keyboard 22, the first display device 23, the touch panel 26, the second display device 24, the connection interface 66, the drawer 21, and the printer 67 are connected via a bus line.

The CPU 61 collectively controls the operation of the POS terminal 11. The ROM 62 stores various programs and data. The RAM 63 temporarily stores various programs and stores various data in a rewritable manner. The RAM 63 stores an image data table 72 described later. The image data table 72 is not limited to being stored in the RAM 63 and may be stored in another storage medium such as the storage section 64 or may be stored in another device such as a store server.

The keyboard 22 is provided with various keys for operating the POS terminal 11.

The storage section 64 is a nonvolatile storage device such as an HDD (Hard Disk Drive), an SSD (Solid State Drive), and the like. The storage section 64 stores a control program 70 and a PLU file 71. The PLU file 71 is not limited to being stored in the storage section 64, and may be stored in another storage medium or may be stored in another device such as the store server.

The control program 70 includes an operating system and programs for realizing functions of the POS terminal 11. The control program 70 includes programs for realizing characteristic functions according to the present embodiment.

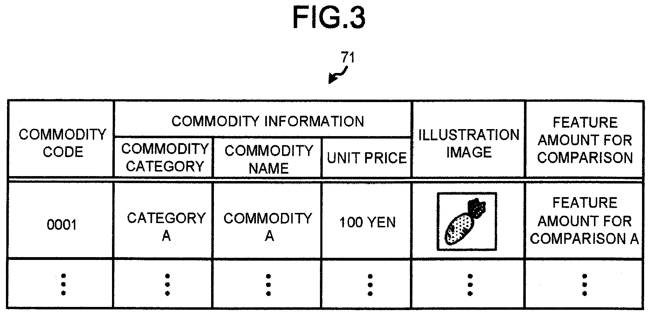

The PLU file 71 is a commodity file in which information relating to a sales registration of a commodity is stored for each of various commodities displayed and sold in the store. Fig. 3 is a view illustrating an example of the data structure of the PLU file 71. The PLU file 71 stores a commodity code, a commodity information, an illustration image and a feature amount for comparison in an associated manner for each commodity. The commodity code, i.e., identification information, is capable of identifying a commodity. The commodity information includes a commodity category to which the commodity belongs, a commodity name, a unit price and the like. The illustration image shows the commodity. The feature amount for comparison is obtained by parameterizing appearance features such as a standard shape, surface tint, pattern, concave-convex state and the like of commodity. The feature amount for comparison is data for comparison used for determination of a similarity degree described later.

Returning to Fig. 2, the CPU 61 of the POS terminal 11 is connected to the communication interface 65. The communication interface 65 is used to communicate with an external device such as a store computer via a network.

The connection interface 66 is used for connecting with the commodity reading apparatus 101. The printer 67 prints transaction contents in one transaction on a receipt paper.

The commodity reading section 110 of the commodity reading apparatus 101 includes a CPU 161, a ROM 162, a RAM 163, the image capturing section 164, a voice output section 165, and a connection interface 175. The CPU 161, the ROM 162, the RAM 163, the image capturing section 164, the voice output section 165, and the connection interface 175 are connected via a bus line.

The CPU 161 collectively controls the operation of the commodity reading apparatus 101. The ROM 162 stores various programs and data. The RAM 163 temporarily stores various programs and stores various data in a rewritable manner.

The image capturing section 164 includes an image sensor (not shown) such as a color CCD image sensor and a color CMOS image sensor, and a light source (not shown) such as an LED. The image capturing section 164 captures an image from the inside of the reading window 103 under the control of the CPU 161. For example, the image capturing section 164 captures image data at a frame rate such as 30 fps (Frame Per Second). The image capturing section 164 stores the image data sequentially captured in the RAM 163.

The voice output section 165 includes a sound circuit, a speaker and the like for generating a preset warning sound. The voice output section 165 carries out notification by issuing a warning sound and a voice under the control of the CPU 161.

The connection interface 175 connects with the POS terminal 11 and the display-operation section 104.

The display-operation section 104 of the commodity reading apparatus 101 includes a connection interface 176, the keyboard 107, the first display device 106, the touch panel 105, the second display device 109, and the card reader 111. The connection interface 176, the keyboard 107, the first display device 106, the touch panel 105, the second display device 109, and the card reader 111 are connected via a bus line.

The connection interface 176 is used for connecting with the POS terminal 11 and the commodity reading section 110.

The card reader 111 reads information stored in a storage medium of a card used for settlement such as a credit card. The card reader 111 reads information stored in the storage medium of the card inserted in the card reading slot 108.

The operation of the display-operation section 104 is controlled by the CPU 161 of the commodity reading section 110 or the CPU 61 of the POS terminal 11.

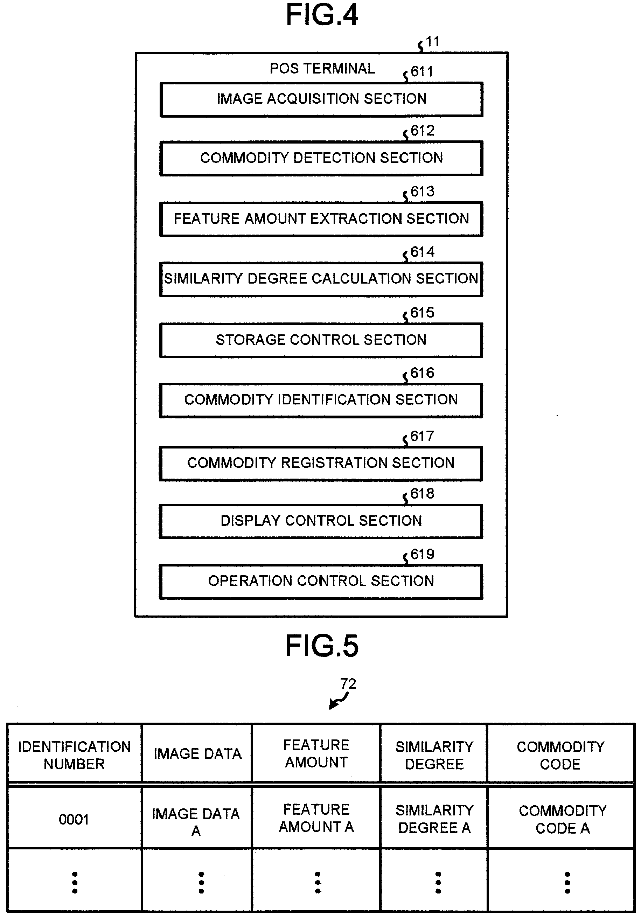

The characteristic functions included in the POS terminal 11 are described. Fig. 4 is a block diagram illustrating the characteristic functional components of the POS terminal 11. The CPU 61 copies or decompresses the control program 70 in the storage section 64 on the RAM 63 and operates according to the control program 70 to generate each functional section on the RAM 63 shown in Fig. 4. Specifically, the CPU 61 includes, as functional sections, an image acquisition section 611, a commodity detection section 612, a feature amount extraction section 613, a similarity degree calculation section 614, a storage control section 615, a commodity identification section 616, a commodity registration section 617, a display control section 618, and an operation control section 619.

The image acquisition section 611 outputs an image capturing request to the image reading apparatus 101 to enable the image capturing section 164 to start an image capturing operation. The image capturing section 164 stores the image data captured sequentially in the RAM 163. The commodity reading apparatus 101 sequentially outputs the image data stored in the RAM 163 to the image acquisition section 611 of the POS terminal 11. Then, the image acquisition section 611 sequentially receives the input of the image data captured by the image capturing section 164.

The commodity detection section 612, i.e., a detection module, detects a commodity contained in the image data received by the image acquisition section 611. For example, the commodity detection section 612 detects a part or all of the commodity contained in the image data, using a pattern matching technology. Specifically, the commodity detection section 612 extracts a contour line from a binary image of the image data. The commodity detection section 612 detects the commodity based on a difference between a contour line extracted from an image data prepared in advance and the contour line extracted from the image data to be detected. The image data prepared in advance is obtained at the time the image capturing section 164 captures a background not containing a commodity and the like. Thus, the commodity detection section 612 can detect the contour line, which is not contained in the contour line extracted from the image data prepared in advance, extracted from the image data to be detected on condition that the commodity is contained in the image data to be detected. The commodity detection section 612 detects the commodity based on the contour line not contained in the contour line extracted from the image data prepared in advance.

The commodity detection section 612 detects that the commodity is disappeared from the image data (frame out) received by the image acquisition section 611. In other words, the commodity detection section 612 detects that the commodity is not contained in the image data received by the image acquisition section 611. For example, the commodity detection section 612 detects that the commodity is not present based on the difference between the contour line extracted from the image data prepared in advance and the contour line extracted from the image data to be detected. Alternatively, the commodity detection section 612 may detect that the commodity is not present according to brightness. In a case in which the commodity is not positioned near a light source of the image capturing section 164, in other words, near the reading window 103, the brightness of the image data captured by the image capturing section 164 becomes a low value. On the other hand, by moving the commodity desired to be recognized closer to the reading window 103, as the light from the light source is reflected by the commodity, the brightness of the image data captured by the image capturing section 164 becomes a high value. The commodity detection section 612 determines that the commodity is contained in the image data on condition that the brightness is equal to or greater than a predetermined reference value. On the other hand, the commodity detection section 612 determines that the commodity is not contained in the image data on condition that the brightness is smaller than the predetermined reference value.

The feature amount extraction section 613 extracts the state of the surface of the commodity, e.g., the tint and the concave-convex state, detected by the commodity detection section 612 from the image data captured by the image capturing section 164 as the feature amount.

The similarity degree calculation section 614 calculates a similarity degree between the commodity and each commodity registered in the PLU file 71 by comparing the feature amount for comparison of the commodity registered in the PLU file 71 with the feature amount of the commodity extracted by the feature amount extraction section 613. The similarity degree indicates how much similar a part or all of the commodity is to that of the registered commodity if the feature amount for comparison of the commodity stored in the PLU file 71 is set to 100% = "similarity degree: 1.0". The similarity degree calculation section 614 may change, for example, the weighting in calculation of the similarity degrees of the tint and the surface concave-convex state.

The recognition of an object contained in an image as stated above is referred to as a general object recognition. As to the general object recognition, various recognition technologies are described in the following document.

Keiji Yanai "Present situation and future of generic object recognition", Journal of Information Processing Society, Vol. 48, No. SIG16 [Search on Heisei 28 April 29th], Internet < URL: http://mm.cs.uec.ac.jp/IPSJ-TCVIM-Yanai.pdf>

In addition, the technology for carrying out the general object recognition by performing an area-division to the image for each object is described in the following document.

Jamie Shotton et.al, "Semantic Texton Forests for Image Categorization and Segmentation", [Search on Heisei 28 April 29th], Internet <URL: http://cite seerx.ist.psu.edu/viewdoc/download?doi=10.1.1.145.3036&rep=rep1&type =pdf>

It is noted that the method for calculating the similarity degrees between the feature amount for comparison of various commodities registered in the PLU file 71 and the feature amount of the commodity extracted by the feature amount extraction section 613 is not particularly limited. For example, the similarity degree calculation section 614 may calculate the similarity degree between the feature amount for comparison of the commodity registered in the PLU file 71 and the feature amount of the commodity extracted by the feature amount extraction section 613 as an absolute evaluation or as a relative evaluation.

The storage control section 615 stores the image data captured by the image capturing section 164 in the image data table 72. Fig. 5 is a view illustrating an example of the data structure of the image data table 72. The image data table 72 stores one or a plurality of identification numbers, the image data, the feature amounts, the similarity degrees, and the commodity codes in an associated manner. The identification number is capable of identifying information stored in the image data table 72. The image data is received by the image acquisition section 611. The image data is used in the general object recognition of the commodity contained in the image data. The feature amount is extracted by the feature amount extraction section 613 on the commodity contained in the associated image data. The similarity degree is the highest similarity degree in the similarity degrees between the feature amount of the commodity contained in the associated image data and the respective feature amount for comparison of various commodities registered in the PLU file 71. The commodity code is a code of the commodity with the highest similarity degree. The storage control section 615 deletes the image data stored in the image data table 72 on condition that the commodity is sales-registered. The storage control section 615 is not limited to storing the image data, the feature amount, the similarity degree and the commodity code in the same data table, but may store them in different data tables respectively.

Returning to Fig. 4, the commodity identification section 616 extracts commodity information of the commodity corresponding to the commodity contained in the image data from the PLU file 71 based on the similarity degree stored in the image data table 72. In other words, the commodity identification section 616 extracts commodity information of the commodity photographed by the image capturing section 164. In the present embodiment, the commodity identification section 616 extracts commodity information by classifying the commodity into three stages including a confirmed commodity, a commodity candidate and an unidentified commodity according to the similarity degree stored in the image data table 72. The classification according to the similarity degree is merely an example, and the classification may be determined by other methods.

The commodity identification section 616 determines whether or not a predetermined number or more of the similarity degrees equal to or greater than a first threshold value in the same commodity are registered in the image data table 72 as a first condition. The commodity identification section 616 extracts the commodity corresponding to the commodity detected by the commodity detection section 612 from the PLU file 71 as the confirmed commodity on condition that the commodity meets the first condition. The commodity identification section 616 extracts commodity information of the confirmed commodity from the PLU file 71. The confirmed commodity refers to a commodity that can be automatically registered based on the similarity degree stored in the image data table 72 without executing a confirmation operation by the operator. The automatic registration refers to a processing of sales-registering the confirmed commodity as a commodity to be sold without requiring the confirmation operation by the operator.

The commodity identification section 616 determines whether or not a predetermined number or more of the similarity degrees equal to or greater than a second threshold value in the same commodity are registered in the image data table 72 as a second condition on condition that the first condition is not fulfilled. The second threshold value is smaller than the first threshold value. The commodity identification section 616, an extraction module, extracts one or a plurality of the commodities corresponding to the commodity detected by the commodity detection section 612 from the PLU file 71 as commodity candidates on condition that the second condition is fulfilled. The commodity identification section 616 extracts commodity information of the commodity candidates from the PLU file 71. The commodity candidate refers to a candidate of the commodity corresponding to the commodity detected by the commodity detection section 612 based on the similarity degree stored in the image data table 72. In other words, the commodity candidate is the candidate of the commodity photographed by the image capturing section 164. The commodity candidate is subject to the sales registration as the commodity to be sold through the confirmation operation by the operator such as an operation of selecting the corresponding commodity from one or a plurality of the commodity candidates.

The commodity identification section 616 determines that the commodity is unidentifiable on condition that the second condition is not fulfilled. The commodity identification section 616 extracts no commodity information from the PLU file 71 on condition that it is determined that the commodity is unidentifiable.

The commodity registration section 617 executes the sales registration to the designated commodity as the commodity to be sold. In other words, the commodity registration section 617 sales-registers commodity information of the commodity to be sold. The commodity registration section 617 carries out the sales registration to the corresponding commodity as the commodity to be sold if the commodity identification section 616 determines the corresponding commodity as the confirmed commodity. Alternatively, the commodity registration section 617 carried out the sales registration to a commodity selected from the commodity candidates as the commodity to be sold if the commodity identification section 616 extracts the commodities as the commodity candidates. The commodity registration section 617 carries out the sales registration to a commodity specified according to the commodity code indicated by a code symbol as the commodity to be sold even if the image capturing section 164 reads the code symbol attached to the commodity.

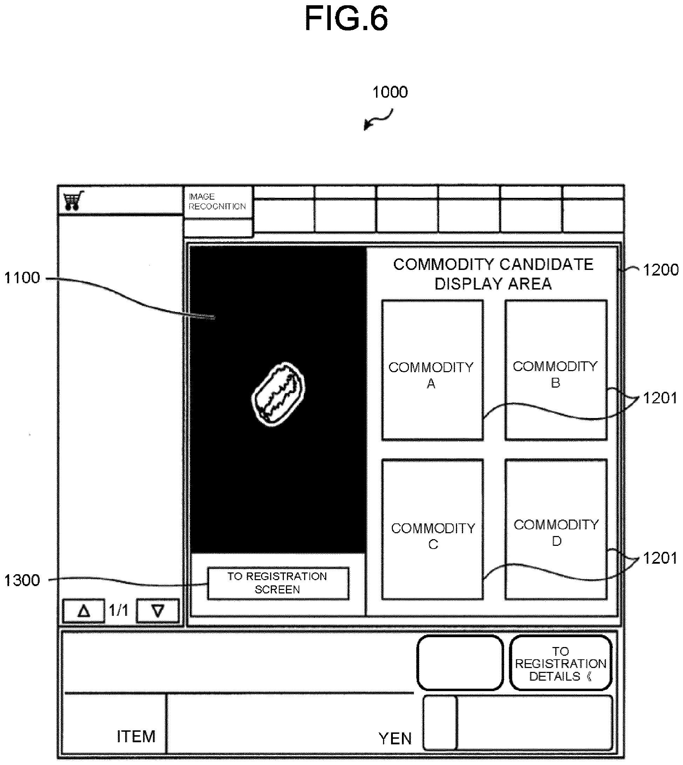

The display control section 618 controls a part or all of the first display device 23, the second display device 24, the first display device 106 and the second display device 109 to display various screens. For example, the display control section 618 displays a commodity registration screen 1000 on the first display device 106. Fig. 6 is a view illustrating an example of the commodity registration screen 1000. The commodity registration screen 1000 includes a captured image display area 1100, a commodity candidate display area 1200 and a registration screen button 1300. The captured image display area 1100 displays the image data the input of which is received by the image acquisition section 611. In other words, the captured image display area 1100 displays the image data captured by the image capturing section 164. The display control section 618 sequentially displays the image data captured by the image capturing section 164 on condition that the commodity detection section 612 detects the commodity from the image data in a state in which the commodity to which the sales registration is executed is not selected from the commodity candidates extracted by the commodity identification section 616. The commodity candidate display area 1200 displays the commodity candidates extracted by the commodity identification section 616. The commodity candidate display area 1200 includes commodity registration buttons 1201 for selecting the commodity to which the sales registration is executed as the commodity to be sold from the commodity candidates. The registration screen button 1300 is used to display a registration screen used for executing the sales registration to the commodity to be sold by pressing a button of the commodity selected from a list of commodities.

The display control section 618, i.e., a display control module, switches the display of a part or all of the commodity registration screen 1000 on condition that the commodity is disappeared in a state in which the commodity to which the sales registration is executed is not selected from the commodity candidates extracted by the commodity identification section 616. For example, the display control section 618 displays another image data stored in the image data table 72 in the captured image display area 1100, instead of the display of the image data captured by the image capturing section 164. In other words, the display control section 618 displays the image data stored in the image data table 72 on condition that the commodity detection section 612 detects no commodity from the image data.

The display control section 618 displays a part or all of the image data stored in the image data table 72 in the captured image display area 1100. For example, the display control section 618 displays a part or all of the image data stored in the image data table 72 as a moving image or motion picture. Alternatively, the display control section 618 displays side by side images obtained by reducing a part or all of the image data stored in the image data table 72. Alternatively, the display control section 618 displays the image data selected from the image data stored in the image data table 72. Specifically, the display control section 618 displays the image data with the highest similarity degree in a plurality of the image data stored in the image data table 72. Alternatively, the display control section 618 displays the image data first, last or intermediately stored in the image data table 72.

The display control section 618 displays the image data to which a processing for making the commodity contained in the image data stored in the image data table 72 easy to be identified by the operator in the captured image display area 1100. For example, the display control section 618 displays the image data obtained by enlarging an area where the commodity detected by the commodity detection section 612 is photographed in the image data stored in the image data table 72. Alternatively, the display control section 618 displays easily visible image data obtained by converting the brightness and the contrast of the image data stored in the image data table 72.

The display control section 618 displays the image data obtained by adding characters and figures to the image data stored in the image data table 72 in the captured image display area 1100. For example, the display control section 618 displays a figure and a message indicating the area where the commodity detected by the commodity detection section 612 is photographed in the image data stored in the image data table 72. Alternatively, the display control section 618 displays the image data together with a message for requiring the operator to select the corresponding commodity. Alternatively, the display control section 618 displays the similarity degree calculated from the image data presently displayed in the image data stored in the image data table 72.

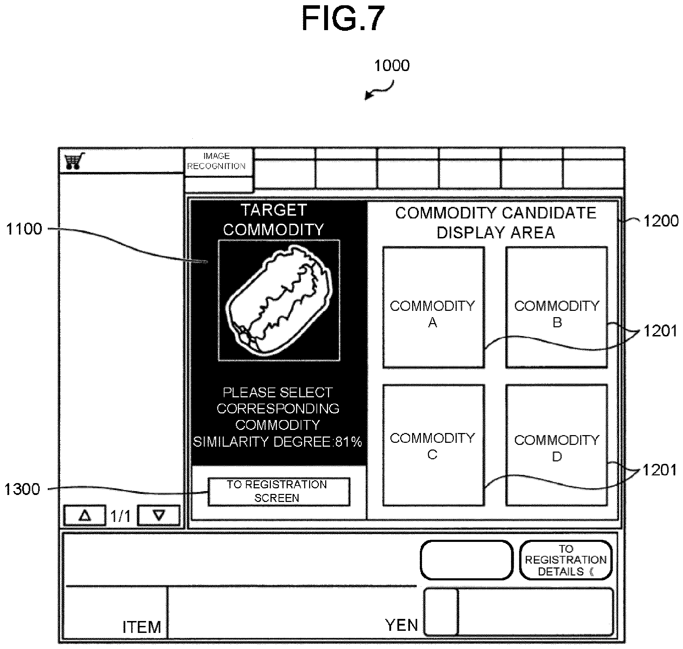

Fig. 7 is a view illustrating an example of the commodity registration screen 1000 in which a part of the display is switched. The image data displayed in the captured image display area 1100 of the commodity registration screen 1000 shown in Fig. 7 is subject to a processing of enlarging the area where the commodity detected by the commodity detection section 612 is photographed. Further, the image data displayed in the captured image display area 1100 is added with a line indicating the area where the commodity is photographed and a message "target commodity". Furthermore, the image data displayed in the captured image display area 1100 is added with a message "please select corresponding commodity". The image data displayed in the captured image display area 1100 is also added with the similarity degree calculated from the image data, for example, "the similarity degree: 81 %".

Return to Fig. 4, the operation control section 619 controls a part or all of the keyboard 22, the touch panel 26, the touch panel 105 and the keyboard 107 to receive various operations. For example, the operation control section 619 receives an operation for selecting the commodity candidates displayed on the commodity registration screen 1000 by the display control section 618. In other words, the operation control section 619 receives an operation of pressing the commodity registration button 1201 on the commodity registration screen 1000.

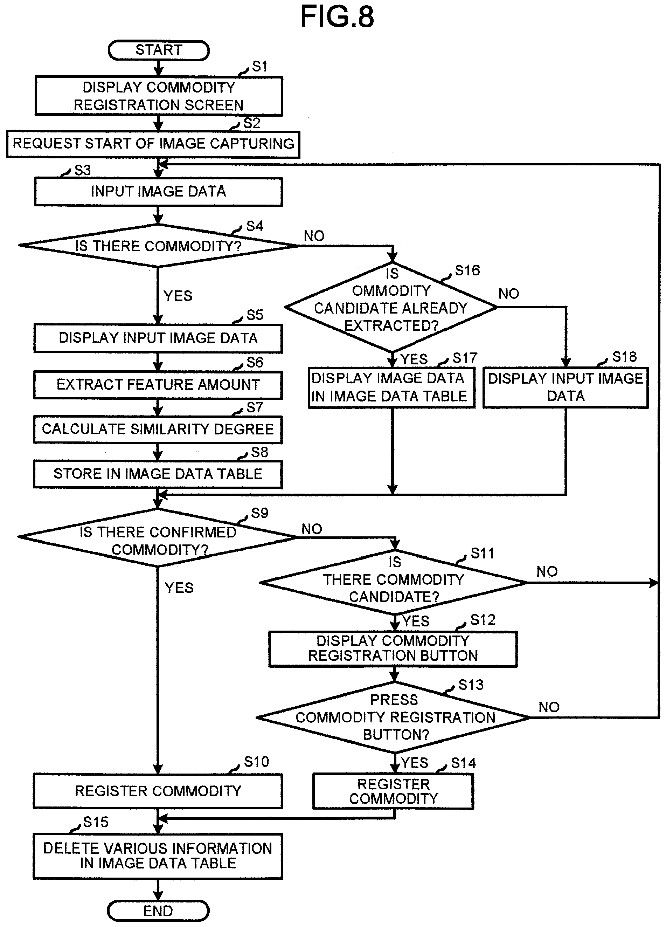

Next, a commodity registration processing executed by the POS terminal 11 is described. Fig. 8 is a flow chart illustrating an example of the commodity registration processing executed by the POS terminal 11 according to the embodiment.

The display control section 618 of the POS terminal 11 displays the commodity registration screen 1000 (Act S1).

The image acquisition section 611 of the POS terminal 11 requests the commodity reading section 110 to start the image capturing by the image capturing section 164 (Act S2). The image acquisition section 611 of the POS terminal 11 receives input of the image data sequentially captured by the image capturing section 164 from the commodity reading section 110 (Act S3).

The commodity detection section 612 of the POS terminal 11 determines whether or not the commodity is contained in the image data (Act S4). If the commodity is not contained in the image data (No in Act S4), the commodity detection section 612 of the POS terminal 11 proceeds to the processing in Act S16. On the other hand, if the commodity is contained in the image data (Yes in Act S4), the display control section 618 of the POS terminal 11 sequentially displays the input image data in the captured image display area 1100 of the commodity registration screen 1000 (Act S5).

The feature amount extraction section 613 of the POS terminal 11 extracts the feature amount of the commodity detected by the commodity detection section 612 (Act S6). The similarity degree calculation section 614 of the POS terminal 11 calculates the similarity degree for each commodity by comparing the feature amount extracted by the feature amount extraction section 613 and the feature amount for comparison of each commodity in the PLU file 71 (Act S7). The storage control section 615 of the POS terminal 11 stores the similarity degree, the feature amount, the image data, and the commodity code of the commodity having the highest similarity degree in the image data table 72 (Act S8).

The commodity identification section 616 of the POS terminal 11 determines whether or not the commodity corresponding to the commodity contained in the image data can be extracted as a confirmed commodity from the PLU file 71 (Act S9).

If the commodity can be extracted as a confirmed commodity (Yes in Act S9), the commodity registration section 617 of the POS terminal 11 carries out the sales registration to the extracted confirmed commodity as a commodity to be sold (Act S10). The POS terminal 11 ends the commodity registration processing.

On the other hand, if the commodity cannot be extracted as a confirmed commodity (No in Act S9), the commodity identification section 616 of the POS terminal 11 determines whether or not the commodity corresponding to the commodity contained in the image data can be extracted as a commodity candidate from the PLU file 71 (Act S11). If the commodity cannot be extracted as a commodity candidate (No in Act S11), the POS terminal 11 proceeds to the processing in Act S3.

On the other hand, if the commodity can be extracted as a commodity candidate (Yes in Act S11), the display control section 618 of the POS terminal 11 displays the commodity registration button 1201 for executing the sales registration to the extracted commodity candidate in the commodity candidate display area 1200 (Act S12).

The commodity registration section 617 of the POS terminal 11 determines whether or not the commodity registration button 1201 is pressed (Act S13). If the commodity registration button 1201 is not pressed (No in Act S13), the POS terminal 11 proceeds to the processing in Act S3.

On the other hand, if the commodity registration button 1201 is pressed (Yes in Act S13), the commodity registration section 617 of the POS terminal 11 carries out the sales registration to the commodity associated with the commodity registration button 1201 as a commodity to be sold (Act S14).

The storage control section 615 of the POS terminal 11 deletes various information such as the image data stored in the image data table 72 (Act S15). The POS terminal 11 ends the commodity registration processing.

If the commodity is not contained in the image data in Act S4 (No in Act S4), the display control section 618 of the POS terminal 11 determines whether or not the commodity identification section 616 already extracts commodity candidates (Act S16). If the commodity identification section 616 already extracts the commodity candidates (Yes in Act S16), the display control section 618 of the POS terminal 11 displays a part or all of the image data stored in the image data table 72 in the captured image display area 1100 (Act S17). The POS terminal 11 proceeds to the processing in Act S9.

On the other hand, if the commodity identification section 616 extracts no commodity candidates yet (No in Act S16), the display control section 618 of the POS terminal 11 sequentially displays the input image data in the captured image display area 1100 of the commodity registration screen 1000 (Act S18). The POS terminal 11 proceeds to the processing in Act S9.

Through the above operation, the POS terminal 11 ends the commodity registration processing.

As stated above, in accordance with the POS terminal 11 of the present embodiment, the commodity identification section 616 extracts the commodity candidates of the commodity corresponding to the commodity contained in the image data captured by the image capturing section 164. The display control section 618 displays the image data stored in the image data table 72 in the captured image display area 1100 on condition that the commodity is disappeared before the commodity photographed by the image capturing section 164 is selected from the commodity candidates extracted by the commodity identification section 616. The display control section 618 displays the image data used for extraction of the commodity candidates by the commodity identification section 616. The POS terminal 11 displays another image data from which the commodity detection section 612 detects the commodity on the commodity registration screen 1000 on condition that the commodity is not held over the image capturing section 164. Thus, even if the operator forgets the commodity held over the image capturing section 164, it is surely performed that the operator selects a commodity candidate corresponding to the commodity held over the image capturing section 164 by referring to the displayed image data. Thus, the POS terminal 11 according to the present embodiment can improve the operability in the operation of selection of the target object with the general object recognition.

Although several embodiments of the present invention are described above, these embodiments are illustrated as examples but not as limitations to the scope of the present invention. Novel embodiments may be embodied in a variety of other forms; furthermore, various omissions, substitutions, variations or combinations may be devised without departing from the framework of the invention. The accompanying claims and their equivalents are intended to cover such forms or modifications as would fall within the scope of the invention.

In the above embodiment, the POS terminal 11 is applied as the information processing apparatus having characteristic functions (the image acquisition section 611, the commodity detection section 612, the feature amount extraction section 613, the similarity degree calculation section 614, the storage control section 615, the commodity identification section 616, the commodity registration section 617, the display control section 618 and the operation control section 619). However, the present invention is not limited to this, for example, the commodity reading apparatus 101 may be applied as the information processing apparatus having these characteristic functions (the image acquisition section 611, the commodity detection section 612, the feature amount extraction section 613, the similarity degree calculation section 614, the storage control section 615, the commodity identification section 616, the commodity registration section 617, the display control section 618, and the operation control section 619). Furthermore, these characteristic functions may be separated in the POS terminal 11 and the commodity reading apparatus 101.

In the above embodiment, a case in which the data for comparison is the feature amount is described; however, the data for comparison may also be a captured commodity image (reference image).

In the above embodiment, the invention is applied to the checkout system 1 including the POS terminal 11 and the commodity reading apparatus 101. However, the present invention is not limited to this. The invention may be applied to a single apparatus provided with the functions of the POS terminal 11 and the commodity reading apparatus 101. As the single apparatus having the functions of the POS terminal 11 and the commodity reading apparatus 101, a self-checkout apparatus (hereinafter, simply referred to as a self-checkout POS) installed in a shop such as a supermarket is exemplified.

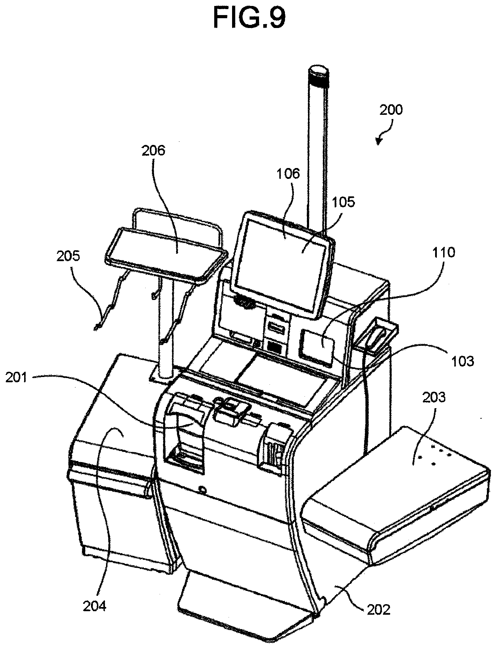

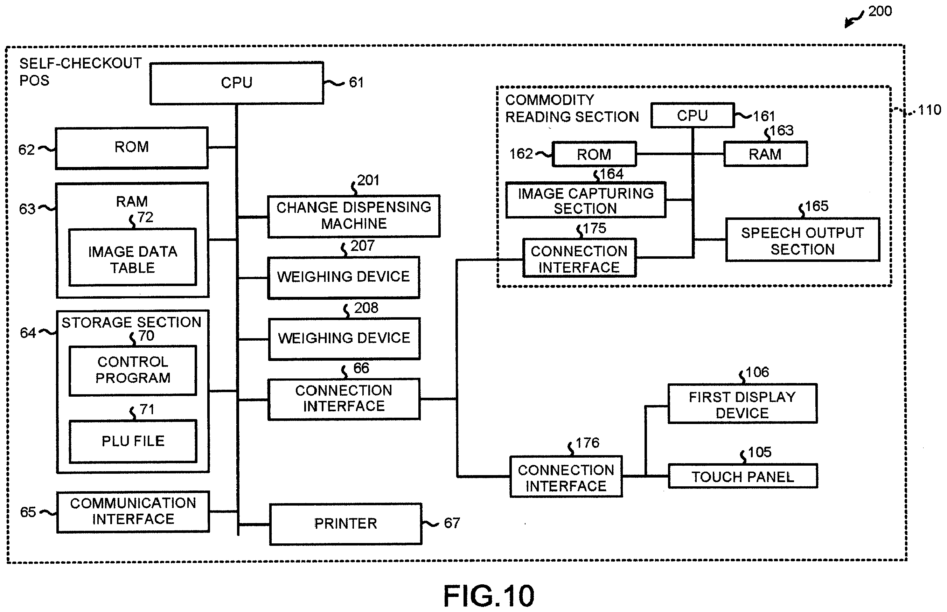

Fig. 9 is a perspective view illustrating an example of the constitution of a self-checkout POS 200. Fig. 10 is a block diagram illustrating an example of the hardware structure of the self-checkout POS 200. Hereinafter, the same components as in Fig. 1 and Fig. 2 are donated with the same reference numerals, and the repeated description thereof is omitted. As shown in Fig. 9 and Fig. 10, a main body 202 of the self-checkout POS 200 is provided with the first display device 106 on the surface of which the touch panel 105 is installed and the commodity reading section 110 for reading a commodity image to recognize (detect) a category of the commodity.

The first display device 106 is, for example, a liquid crystal display. The first display device 106 displays the commodity registration screen 1000. The first display device 106 switches a part or all of the display on the commodity registration screen 1000 on condition that the commodity is disappeared. For example, in the captured image display area 1100, the first display device 106 displays the image data stored in the image data table 72, instead of the image data captured by the image capturing section 164. Alternatively, the first display device 106 displays a guidance screen for informing a customer of an operation method of the self-checkout POS 200, various input screens and the registration screen for displaying commodity information read by the commodity reading section 110. Alternatively, the first display device 106 displays a total amount of the commodities, a deposited amount and a change amount, and also displays a settlement screen for selecting a payment method.

The commodity reading section 110 reads the commodity image with the image capturing section 164 by holding a code symbol attached to the commodity over the reading window 103 of the commodity reading section 110 by the customer.

The self-checkout POS 200 is provided with a commodity placement table 203 for placing unsettled commodities taken in a basket at the right side of the main body 202. The self-checkout POS 200 is also provided with a commodity placement table 204 for placing settled commodities at the left side of the main body 202. The commodity placement table 204 includes a bag hook 205 for hanging bag for putting settled commodities therein and a temporary placement table 206 for temporarily placing the settled commodities before the settled commodities are put in the bag. The commodity placement tables 203 and 204 are respectively provided with weighing devices 207 and 208, to have a function of confirming that the weight of commodities is the same before and after the settlement.

The main body 202 of the self-checkout POS 200 is provided with a change dispensing machine 201 for depositing bills for settlement and receiving change bills.

In a case of applying the self-checkout POS 200 with such a constitution to the checkout system 1, the self-checkout POS 200 functions as the information processing apparatus.

The programs executed by each device of the foregoing embodiment and the modification may be incorporated into a storage medium (ROM or storage section) of each device to be provided; however, the present invention is not limited to this. The programs may be recorded in a computer-readable recording medium such as a CD-ROM, a FD (Flexible Disk), a CD-R, a DVD (Digital Versatile Disk) and the like in the form of installable or executable file to be provided. Further, the storage medium is not limited to a medium independent of a computer or an embedded system and also contains a storage medium that stores or temporarily stores the programs by downloading the programs transmitted through a LAN or an Internet.

Further, the programs executed by each device of the foregoing embodiment and the modification is stored in a computer connected with a network and downloaded via the network to be supplied or may be supplied or distributed via the network such as the Internet.

## Claims

1. An information processing apparatus, comprising:
a detection module configured to detect an object contained in an image data captured by an image capturing section;
an extraction module configured to extract candidates corresponding to the object photographed by the image capturing section based on a similarity degree between a feature amount of the object extracted from the image data and a feature amount of each object for comparison in the object detected by the detection module;
a display control module configured to display the image data captured by the image capturing section and the candidates extracted by the extraction module; and
an operation control module configured to receive an operation for selecting the candidate displayed by the display control module, wherein
the display control module displays another image data from which the detection module detects the object, instead of the image data displayed on condition that the detection module detects no object in a state in which the operation control module does not receive the operation for selecting the candidate.

2. The information processing apparatus according to claim 1, wherein the extraction module extracts candidates corresponding to the object photographed by the image capturing section based on one or a plurality of the similarity degrees between the feature amount of the object extracted from one or a plurality of the image data and the feature amount of various objects for comparison, and the display control module displays one or a plurality of another image data from which the detection module detects the object on condition that the detection module detects no object in a state in which the operation control module does not receive the operation for selecting the candidate.

3. The information processing apparatus according to claim 2, wherein the display control module displays the image data having the highest similarity degree in the candidates within another image data from which the detection module detects the object on condition that the detection module detects no object in a state in which the operation control module does not receive the operation for selecting the candidate.

4. The information processing apparatus according to any one of claims 1 to 3, wherein the display control module displays image data to which a processing for making the object contained in the image data easy to be identified is executed instead of the image data displayed on condition that the detection module detects no object in a state in which the operation control module does not receive the operation for selecting the candidate.

5. The information processing apparatus according to any one of claims 1 to 4, wherein the display control module displays the image data together with a message for requesting selection of the object from the candidates extracted by the extraction module on condition that the detection module detects no object in a state in which the operation control module does not receive the operation for selecting the candidate.

6. A method for ensuring an operation for selection, including:
detecting an object contained in an image data captured;
extracting candidates corresponding to the object photographed based on a similarity degree between a feature amount of the object extracted from the image data and a feature amount of each object for comparison in the object detected;
displaying the image data captured and the extracted candidates;
receiving an operation for selecting the displayed candidate; and
displaying another image data from which the object is detected, instead of the image data displayed on condition that no object is detected in a state in which the operation for selecting the candidate is not received.

7. The method according to claim 6, further comprising:
extracting candidates corresponding to the object photographed based on one or a plurality of the similarity degrees between the feature amount of the object extracted from one or a plurality of the image data and the feature amount of various objects for comparison; and
displaying one or a plurality of another image data from which the object is detected on condition that no object is detected in a state in which the operation for selecting the candidate is not received.

8. The method according to claim 7 further comprising displaying the image data having the highest similarity degree in the candidates within another image data from which the object is detected on condition that no object is detected in a state in which the operation for selecting the candidate is not received.

9. The method according to any one of claims 6 to 8, further comprising displaying image data to which a processing for making the object contained in the image data easy to be identified is executed instead of the image data displayed on condition that no object is detected in a state in which the operation for selecting the candidate is not received.

10. The information processing apparatus according to any one of claims 6 to 9, further comprising displaying the image data together with a message for requesting selection of the object from the candidates extracted on condition that no object is detected in a state in which the operation for selecting the candidate is not received.
